# EUROPEAN PATENT SPECIFICATION

(11) **EP 3 905 631 B1**
(45) Date of publication and mention of the grant of the patent: **29.05.2024**
(21) Application number: 21168343.8
(22) Date of filing: 14.04.2021
(51) Int. Cl.: H04L 9/40, G10L 15/22, H04M 3/42, G06F 21/62, G06F 21/60, G10L 13/00, G10L 15/26

(54) **SYSTEMS AND METHODS FOR SPEAKER ANONYMIZATION**
SYSTEME UND VERFAHREN ZUR SPRECHERANONYMISIERUNG
SYSTÈMES ET PROCÉDÉS D'ANONYMISATION DE HAUT-PARLEUR

(30) Priority: 01.05.2020 US 202063018781 P
(43) Date of publication of application: 03.11.2021
(73) Proprietor: Avago Technologies International Sales Pte. Limited, Singapore 768923 (SG)
(72) Inventor: Palm, Stephen Ray, Irvine, CA, 92606 (US)
(74) Representative: Dilg, Haeusler, Schindelmann Patentanwaltsgesellschaft mbH

(56) References cited:
- US-A1- 2014 207 442
- US-A1- 2019 180 759
- VAIDYA TAVISH ET AL: "You Talk Too Much: Limiting Privacy Exposure Via Voice Input", 2019 IEEE SECURITY AND PRIVACY WORKSHOPS (SPW), IEEE, 19 May 2019 (2019-05-19), pages 84-91, XP033619080, DOI: 10.1109/SPW.2019.00026 [retrieved on 2019-09-18]

## Description

### BACKGROUND

The present disclosure relates generally to data privacy. More particularly, the present disclosure relates to data privacy in audio signals.

Some systems extract private information of a user from audio data that includes spoken words of the user. For example, the systems could extract private information such as age of the user, an emotional state of a user, gender of a user, location of a user (e.g., in a building, in a noisy city, in a living room watching television, etc.), etc. To protect the privacy of the user, it would be desirable to prevent systems from extracting the private information.

Existing audio processing systems do not protect the privacy of a user. Some audio processing systems perform secure voice encryption. These are systems where a voice is encrypted to protect the voice. However, because the voice is encrypted, secret information can be used to decode the voice. In such a system, the voice data could be decrypted and the private information extracted.

Patent document US 2019/180759 A1 teaches a home assistant with a microphone which protects the privacy of a user. Patent document US 2014/207442 A1 teaches a method for obscuring private information in a speech signal before sending the signal to a speech recognition server. Non patent literature "You Talk Too Much: Limiting Privacy Exposure Via Voice Input" by Tavish Vaidya, 2019 IEEE Security and Privacy Workshops, teaches a method for protecting the privacy exposure via Voice Input. The privacy may be improved using Mel-frequency cepstral coefficients (MFCCs).

### SUMMARY

There may be a need for improving the data privacy in audio signals.

This need may be met by the subject matter according to the independent claims. Advantageous embodiments of the present invention are described by the dependent claims.

According to a first aspect of the invention there is provided a device comprising (a) one or more microphone devices configured to generate audio data comprising spoken voice data based on spoken words of a user; and (b) an anonymization circuit configured to (b1) receive the audio data comprising the spoken voice data from the one or more microphone devices; (b2) generate anonymized audio data by anonymizing the audio data to prevent one or more applications from extracting private information of the user from the audio data (AD); and (b3) provide the anonymized audio data to the one or more applications.

The described anonymization circuit may employ at least one per se well known algorithm for removing user characteristic information from the audio data provided preferably in digital form by the (at least one) microphone device. Thereby, depending on the specific application and in particular depending on the characteristic information to be removed an appropriate well-known algorithm may be employed. The characteristic information, which should be removed, may be e. g. the gender of the user, the age of the user, dialectic information being indicative of family background of the user etc. Alternatively or in combination, the characteristic information may include background acoustic signals which may represent the acoustic environment of the user and which may be indicative for the current location the user.

According to an embodiment of the invention the device further comprises an identification circuit configured to (i) receive the anonymized audio data from the anonymization circuit; (ii) evaluate operations performed by the anonymization circuit by determining whether the private information is extractible from the anonymized audio data; and (iii) cause the anonymization circuit to update the one or more operations in response to a determination that the private information is extractible from the anonymized audio data.

The anonymized audio data received by the identification circuit may be considered as a "feedback signal". This feedback signal may be used for a quality indicator or quality check for the degree of anonymization carried out by the anonymization circuit. For instance, with the help of this feedback signal a comparison can be made by the identification circuit whether for instance a characteristic feature of the user, e. g. the gender, can be derived from the (original) audio data and can be not derived from the anonymized audio data. This would be an indication for a successful anonymization at least with respect to the exemplary characteristic "gender".

According to a further embodiment of the invention the anonymization circuit is configured to generate the anonymized audio data by (i) generating text data from the voice data based on the spoken words of the user; and (ii) synthesizing the anonymized audio databased on the text data.

According to a further embodiment of the invention the anonymization circuit is configured to generate the anonymized audio data by changing a pitch of the voice data.

The pitch may be a very private user characteristic information because it can be indicative, for example, of the gender or the actual mental tension of the user. A high degree of anonymization can be realized with a pitch change. Further, changing the pitch can be accomplished in a simple and effective manner by well known audio algorithms.

According to a further embodiment of the invention the anonymization circuit is configured to generate the anonymized audio data by applying a wideband vocoder to the audio data.

In this context a vocoder is a category of voice codec operation that analyzes and synthesizes the human voice signal for audio data compression, multiplexing, voice encryption or voice transformation. It may be used as a simple and effective well-known procedure from removing and/or changing user characteristic audio information of the original audio data generated by the at least one microphone device.

According to a further embodiment of the invention the anonymization circuit is configured to generate the anonymized audio data by applying a Mel Frequency Cepstral Coefficient (MFCC) algorithm to the audio data, wherein the anonymized audio data includes one or more features identified by the MFCC algorithm.

The MFCC algorithm is a well-known procedure for representing the short-term power spectrum of a sound signal, here the original audio data, based on a linear cosine transform of a log power spectrum on a nonlinear mel scale of frequency. In this context the mel scale is a perceptual scale of pitches judged by listeners to be equal in distance from one another. The described use of the MFCC algorithm may allow for a high degree of anonymization in a simple and effective manner.

Similarly, the anonymization circuit could be configured to generate the anonymized audio data by applying a Vocal Length Tract Normalization (VTLN) algorithm to the audio data, wherein the anonymized audio data includes one or more features identified by the nature of a speaker's voice represented by vocal track length. The frequency scale of the audio data can be manipulated by using a warping function, for example, bilinear or gender based variation based on signal analysis to estimate parameters such as pitch and kurtosis used to modify the warping level for VTLN based on the signal statistics.

According to a further embodiment of the invention the anonymization circuit and/or the identification circuit is configured to identify the user based on the voice data and output an identifier associated with the user to the one or more applications, wherein the one or more applications are configured to generate one or more personalized outputs for the user based on the identifier.

The identifier may be coded in metadata which in the technology described in this document characterize the audio data in a descriptive manner. The metadata may include for instance the information about the gender of the user.

According to a further embodiment of the invention the one or more applications are at least one of one or more local applications run by the device and one or more remote applications.

This may mean that the described device can be used for audio anonymization for many types of applications. Thereby, it does not matter whether the respective application is a local or a remote application. Of course, in case of a remote application an appropriate interface between the described device and the application, e. g. via a communication network such as the internet, will be necessary.

According to a further embodiment of the invention the device further comprises (a) a multiplexing circuit configured to multiplex an output to the one or more applications between the anonymized audio data and an audio signal; (b) a controller circuit is configured to (b1) receive a user input indicating to apply anonymization to the audio data; and (b2) cause the multiplexing circuit to output the anonymized audio data.

The audio signal may be provided to at least one of applications. The respective application may use the provided audio signal for providing desired services to the used.

An input user interface for the user input (signal) may be used for selecting, (exclusively) by the user, the degree of anonymization. Thereby, the degree of anonymization may define the amount and the type of information which is allowed to be forwarded to and/or shared with at least one of the applications. The user input signal may be changed by the user any time the user wants to change the desired degree of anonymization. This means that the degree of anonymization may be changed during a session in which the user uses and/or is connected with the respective application.

The degree of anonymization may be changed in discrete steps. In some embodiments three degrees may be chosen by the user. The corresponding anonymization modes may be denominated (a) full or maximum anonymization mode, (b) partial anonymization mode, and (c) zero anonymization mode. Theoretically, any number of anonymization steps may be employed. In practice, the number of available anonymization steps may depend on the type and the number of available anonymization algorithms which can be used by the anonymization circuit.

It is pointed out that by controlling the state of the multiplexing circuit the controller circuit may define the data signal routing through the entire device. Since in turn the user can provide the controller circuit with its user input the data signal routing paths may be under (indirect) control of the user. In this respect it is mentioned that typically the user has no knowledge about the internal architecture of the device and hence also no knowledge about the internal data signal routing. However, this is not necessary because solely the controller circuit may be responsible for the technical implementation of the data signal routing paths.

According to a further embodiment of the invention the controller circuit is configured to cause a user interface to display an indication of the anonymization being applied to the audio data in response to receiving the user input indicating to apply the anonymization to the audio data.

The described indication may allow the user to recognize and/or remember the current degree of anonymization which is performed by the anonymization circuit. This might be of advantage in particular in embodiments of the device where the degree of anonymization can dynamically changed, for instance by the user itself via the above described user input received from the controller circuit

According to a further embodiment of the invention the controller circuit is configured to (i) receive an indication of specific characteristics of the audio data to provide to each of the one or more applications; and (ii) cause the multiplexing circuit to provide the specific characteristics to each of the one or more applications based on the indication.

According to a further embodiment of the invention the device further comprises a secure access manager connected between the one or more microphone devices and the anonymization circuit, the secure access manager providing a secure interface between the (external) microphone devices and at least the anonymization circuit.

The provided secure access manager may significantly increase the difficulty for unauthorized entities to retrieve the audio data. In the absence of such a secure interface providing a secure data communication channel between the at least one microphone device and the anonymization circuit such an interception would typically not be very difficult because typically used standard microphone devices use well known data formats. Hence, the described secure access manager increases the security level of the described device.

According to a further embodiment of the invention the device further comprises a local content rendering circuit, which is configured for receiving rendering and/or control data from at least one of the one or more applications. Further, the local content rendering circuit is communicatively coupled with the anonymization circuit via a data link for forwarding an audio feedback data signal, wherein the anonymization circuit is configured for generating the anonymized audio data by taking into account also the audio feedback data signal. The rendering data may be any type of (acoustic) media data.

The described local content rendering circuit may allow to generate a standardized (rendering/media data) content which can be consumed by the user with the help of the one or more internal and/or external speaker devices. One or more internal speaker devices may be of advantage in particular in applications of the described technology where the device is e. g. a smart phone or a laptop computer.

The application supplying the rendering and/or control data to the local content rendering circuit may include for instance a speech recognition system which, depending on the user selected degree of audio anonymization, receives fully, partially, or not anonymized audio data.

The described communicative coupling via the data link may be an indirect coupling via the above-described secure access manager. This may provide the advantage that also for the audio feedback data signal a high level of security can be achieved.

Taking into account the audio feedback data signal for the anonymization process may provide the advantage that the signal to noise ratio (SNR) of the output of the anonymization circuit and/or of the secure access manager (circuit) can be improved. This in turn may improve the degree of anonymization of the described audio anonymization technology.

In some embodiments the one or more internal speaker devices and/or the one or more external speaker devices is/are acoustically coupled with the one or more microphone devices and the audio feedback data signal comprises or consists of rendered audio data which are forwarded from the local content rendering circuit to the one or more internal speaker devices and/or to the one or more external speaker devices.

The audio feedback data signal may comprise or may be the same (digital) audio signal which is also forwarded, with the help of the local content rendering circuit, to the one or more internal speaker devices and/or to the one or more external speaker devices by an application. This means that the content of this signal is known by the device/application and it can be a predominantly correlated signal when it is captured by the microphone device(s). This is in contrast to so called uncorrelated signals which may be indicative e. g. for a background noise captured by the microphone device(s) and/or for random noise signal components which are, by nature, generated by any signal processing due to (i) the non-avoidable noise generation of any (hardware) electronic circuit component and/or (ii) an interaction with the acoustic environment between any speaker(s) and capturing microphone(s).

Taking into account the rendered audio data signal may provide the advantage that the signal to noise ratio (SNR) of the output of the anonymization circuit and/or of the secure access manager (circuit) can be (further) improved. This in turn may improve the degree of anonymization of the described audio anonymization technology.

It is pointed out that the described anonymization circuit may also be configured for removing uncorrelated background noise which may originate from any other external source. In this context the person skilled in the art knows algorithm for performing an appropriate rejection of uncorrelated noise. This may allow to further improve the anonymization of the acoustic signal produced by the user and captured by the at least one microphone device.

According to a further embodiment of the invention the device further comprises a service operator interface for receiving information from a service operator, wherein the information comprises (anonymization) setting suggestions for the device.

The described setting suggestions may be "professional" suggestions which are based on and/or have been learned from a plurality of appropriate device settings which may have been successfully employed also by other users of similar devices. Hence, the setting suggestions may provide helpful assistance for the user in order to find / select appropriate device settings.

In some embodiments the setting suggestions may be forwarded (directly) to the above-described controller circuit. The controller circuit may present these setting suggestions to the user. Upon choosing an appropriate device setting the controller circuit may take care of the necessary routing of the (anonymized) audio data through the entire device.

According to a further aspect of the invention there is provided an audio data anonymization method with a device and in particular a device as described above. The provided method comprises (a) generating audio data comprising spoken voice data based on spoken words of a user; (b) receiving the generated audio data by an anonymization circuit; (c) generating anonymized audio data by anonymizing the audio data by the anonymization circuit, wherein the anonymized audio data prevent extracting private information of the user from the audio data; and (d) providing the anonymized audio data to the one or more applications.

### BRIEF DESCRIPTION OF THE DRAWINGS

FIG. 1 shows an example system including a device where voice anonymization is not implemented and private information of a speaker is derived.
FIG. 2 shows an example system including a device that implements voice anonymization.
FIG. 3 shows an example system including secure processing that implements voice anonymization and a secure controller that operates a multiplexer circuit for controlling the output of one or more microphones and anonymized voice data.
FIG. 4 shows a flow diagram of an example process of implementing voice anonymization.

### DETAILED DESCRIPTION

Referring generally to the FIGURES, example systems and methods for speaker anonymization are shown. The present systems and methods can anonymize audio signals that including speaker data, e.g., spoken words of a user, environmental sounds. Anonymizing the audio data can prevent various systems or applications from extracting private information from the audio data. For example, information such as demographic information, gender, age, location, emotional state of the user, etc. could all be extracted from information such as language, pitch and frequency, intensity, cadence, vocabulary, grammar, background noise, etc.

The systems and methods discussed herein can apply anonymization by applying one or more anonymization algorithms to the audio data. For example, in some embodiments, a system could translate spoken words into text data and then utilize a common voice synthesizer for synthesizing audio data based on the text data. In some embodiments, the system could alter the pitch of the spoken words. In some embodiments, the system could translate spoken words into a common language (e.g., English, Esperanto, etc.) which could remove a specific vocabulary used. In some embodiments, the system could process the audio data through a vocoder. In some embodiments, the system could apply the Mel Frequency Cepstral Coefficient (MFCC) algorithm to the audio data. Various other anonymization algorithms can be used to anonymize the audio data.

The system can provide a mode for anonymizing multiple types of information and operations on a device. Furthermore, the system can perform self-checking. For example, the system can perform a self-check to identify a quality of the anonymization. The system can generate a quality indicator to indicate the performance of the anonymization. In some embodiments, an anonymization circuit (e.g., a system on a chip (SOC), an application specific integrated circuit (ASIC), logic circuit, etc.) can directly interface with sensors before other software, middleware, and/or operating systems receive the audio data. In some embodiments, the anonymization circuit can be secure and independent from the other functions provided on a device.

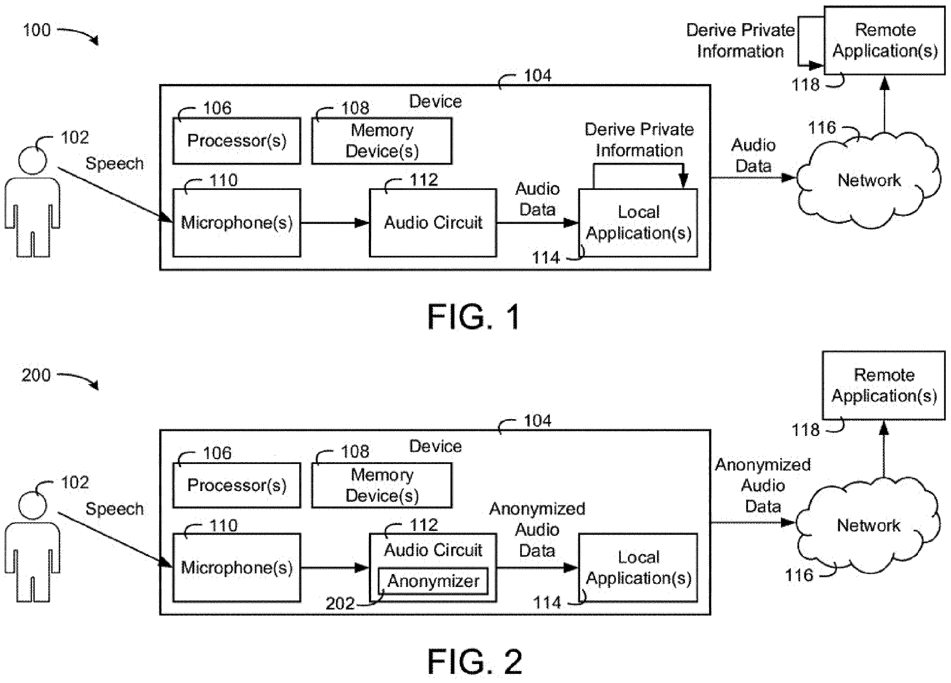

Referring now to **FIG. 1****,** a system 100 is shown including a device 104 where voice anonymization is not implemented and private information of a speaker is derived by local application(s) 114 and remote applications 118. In some embodiments, the device 104 is a smart phone, a laptop computer, a smart television, a set-top box, a video game console, a desktop computer, a computer terminal, a smart television remote, a smart speaker, a smart home hub (e.g., Amazon Alexa, Google home, etc.), and/or any other device that a user 102 may provide audio input to.

In some embodiments, the local application(s) 114 and/or the remote application(s) 118 can be voice controlled applications such as Amazon Alexa or Google Assistant. The local application(s) 114 and/or remote application(s) 118 can provide content via a display (e.g., a display of the device 104 or another device) in response to a request, e.g., a request for weather, a request to see a meeting schedule, a request to open an application, a request to change television channels, a request to open a video streaming service, etc.

The device 104 includes one or more processor(s) 106 and memory device(s) 108. The processor(s) 106 and the memory device(s) 108 can implement some and/or all of the operations of the device 104 as described herein. The processor(s) 106 can be general purpose processors, Application Specific Integrated Circuits (ASICs), Field Programmable Gate Arrays (FPGAs), hardwired logic circuits, microprocessors, and/or any other type of processor. In some embodiments, the memory device(s) 108 may store instructions that can be executed by the processor(s) 106. The memory device(s) 108 can be random access memory (RAM), read only memory (ROM), Flash memory, a solid state disk (SDD), a hard drive disk (HDD), and/or any other type of transitory or non-transitory storage medium.

The device 104 further includes one or more microphone(s) 110. The microphone(s) 110 can include a condenser microphone, a dynamic microphone, a ribbon microphone, a carbon microphone, a piezoelectric microphone, a fiber-optic microphone, a laser microphone, a MicroElectrical-Mechanical System (MEMS) microphone, and/or any other type of microphone. The device 104 can include various amplifiers, filter circuits, digital filters, analog to digital converters, and/or any other circuit or software component for processing audio data. A user may speak to the device 104 and the audio data created by the speech may be processed by an audio circuit 112 of the device 104.

The audio circuit 112 can be configured to perform one or more operations for processing the audio data. The audio circuit 112 can be configured to identify the user 102 based on the audio data. In some embodiments, the audio circuit 112 is configured to perform speech recognition. In some embodiments, the audio circuit 112 is configured to perform speech to text translation. The audio circuit 112 can provide the audio data to the local application(s) 114. Furthermore, via a network 116, the device 104 can provide the audio data to remote application(s) 118. The network 116 can be any type of wireless or wired network. For example, the network could include Ethernet, Wi-Fi, a local area network (LAN), a wide area network (WAN), the Internet, routers, modems, etc.

The local application(s) 114 and/or the remote application(s) 118 can be any application that operates on the audio data and/or is controlled based on the audio data. In some embodiments, because the audio data is not anonymized, the local application(s) 114 and/or the remote application(s) 118 can extract private information about the user 102 from the audio data. For example, the private information could be demographic information about the user 102, gender of the user 102, age of the user 102, a location of the user 102, an emotional state of the user 102, etc. In some embodiments, the local application(s) 114 and/or the remote application(s) 118 can derive the private information by applying an analysis of characteristics such as pitch, frequency, intensity, cadence, vocabulary, grammar, language spoken, environmental audio, etc. To prevent the local application(s) 114 and/or the remote application(s) 118 from deriving the private information, in some embodiments, the audio circuit 112 can anonymize the audio data as is described in greater detail with reference to FIG. 2.

Referring now to **FIG. 2****,** an example system 200 is shown including a device that implements voice anonymization. In the system 200, the audio circuit 112 includes an anonymizer 202. The anonymizer 202 can be configured to anonymize audio data received from the microphone(s) 110 before providing the audio data to the local application(s) 114 and/or the remote application(s) 118. In some cases, because the audio data is anonymized, the local application(s) 114 and/or the remote application(s) 118 cannot derive the private information from the audio data.

In some embodiments, the anonymizer 202 can implement an anonymous mode for the device 104. In some embodiments, the anonymizer 202 may receive user input from the user 102 via spoken words (e.g., via the microphone(s) 110), via a physical button, via a touch screen, etc. The user input may cause the anonymizer 202 to activate an anonymous mode and anonymize the audio data. In some embodiments, the anonymous mode provides speaker privacy and anonymization by reducing (or entirely removing) the identifying and recognizable characteristics of the user 102. The anonymous mode may allow the local application(s) 114 and/or the remote application(s) 118 to extract information of the speech of the user 102 (e.g., the words, a command, a request, etc.) while suppressing the style and transport of the speech which could be used by the remote application(s) 118 and/or the local application(s) 114 to derive private information of the user 102.

In some embodiments, the anonymizer 202 can evaluate various anonymizing transformations to identify which transformations, when applied to particular speech of the user 102, succeed in anonymizing the private information of the user 102 in the audio data. Furthermore, the anonymizer 202 can be configured to securely control the amount of identifying information provided to the local application(s) 114 and/or the remote application(s) 118.

In some embodiments, the anonymizer 202 can operate in the anonymous mode to allow a user to quickly and easily set their device (e.g., the device 104) to an operating setting where the system anonymizes private characteristics and information before the information is transmitted from the device (e.g., to the remote application(s) 118) or provided to in-device third party services (e.g., the local application(s) 114). The device 104 can be configured to operate normally but the speech of the user 102 can be filtered before the audio data leaves the device 104. In some cases, the user 102 may choose to have granular control of the filtering implemented by the anonymizer 202. The user 102 could control the anonymizer 202 by a button, a touch input, a mouse click, etc. In some embodiments, the anonymizer 202 could cause an indicator of the device 104 to indicate that the anonymous mode is entered, e.g., a light emitting diode (LED) lighting up, a display icon or element, a sound played via a speaker, etc.

Some governmental privacy regulations such as the General Data Protection Regulation 2016/679 (GDPR) or the California Consumer Privacy Act 2018 (CCPA) place restrictions on the receiver of private information. The anonymizer 202 can benefit users and/or service operators by preemptively removing identifying and/or private information from audio data before being presented to the service operator.

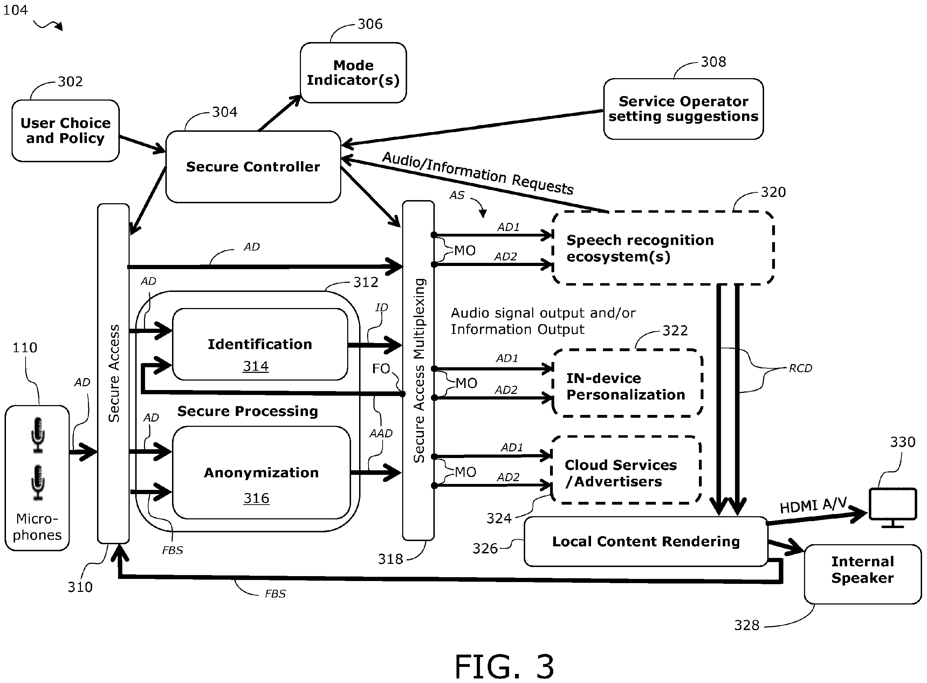

Referring now to **FIG. 3****,** an example system of the device 104 is shown including a secure processor 312 that implements voice anonymization and a secure controller 304 that operates a multiplexer circuit 318 for controlling the output of one or more microphone(s) 110 and anonymized voice data output by the secure processor 312. The secure processor 312 can receive audio data from the microphone(s) 110 via a secure access manager 310. The secure processor 312 includes an identifier circuit 314 and an anonymization circuit 316. The identifier circuit 314 can be configured to identify the user 102 via the speech to the microphone(s) 110 and provide an indication of the identification to the secure access multiplexer circuit 318.

The anonymization circuit 316 can anonymize the voice data and provide the anonymized voice data to the secure access multiplexer circuit 318. In some embodiments, the anonymization circuit 316 can be configured to alter identifying characteristics of the voice data, e.g., change a pitch of the voice data. In some embodiments, the anonymization circuit 316 is configured to extract characteristics from the voice data and then regenerate (synthesize) the characteristics in a uniform manner. For example, the anonymization circuit 316 could translate speech data into text and then synthesize speech data from the text.

In some embodiments, the anonymization circuit 316 applies a Mel Frequency Cepstral Coefficient (MFCC) algorithm to the audio data and/or a wideband vocoder. In some embodiments, the anonymization circuit 316 removes cues from the speech data. For example, the anonymization circuit 316 can be configured to remove background (non-speaker) sounds. The anonymization circuit 316 could apply Blind Source Separation.

In some embodiments, the secure controller 304 can locally control the release and format of identifying information of the secure processor 312. In some embodiments, the secure controller 304 can control the release and format of the identifying information via user choices and/or policies 302. In some embodiments, the secure controller 304 can locally control the types and amounts of anonymization. In some embodiments, the secure controller 304 can locally catalog the specific information that will be allowed to be exposed.

In some embodiments, the secure controller 304 can use the user choice 302 to manage the specific release and format of identifying information and audio output by operating the secure access multiplexer circuit 318 between outputting the audio data output by the secure access manager 310 or the anonymized audio data output by the anonymization circuit 316. In some embodiments, external systems, e.g., speech recognition ecosystems 320, in-device personalization systems 322, cloud services and/or advertisers 324, etc. can make requests for access to audio signal(s) and information categories that the secure processor 312 can provide.

In some embodiments, the secure controller 304 is configured to generate one or more mode indicator(s) 306 and/or cause an output device (e.g., a display 330 and/or internal speaker 328) to output the mode indicator(s) 306. The mode indicator(s) 306 may indicate that the anonymous mode is active or inactive. For example, the secure controller 304 can be configured to cause the display 330 to display the mode indicator(s) 306. In some embodiments, the secure controller 304 is configured to cause the internal speaker 328 to generate an audio output of the mode indicator(s) 306. In some embodiments, the local content rendering circuit 326 can be configured to generate content output for the display 330 and/or the internal speaker 328. The content output could be generated by the speech recognition ecosystem(s) 320, the in-device personalization systems 322, and/or the cloud services 324.

In some embodiments, the local content rendering circuit 326 can add a water mark to content played on the internal speaker 328. In some embodiments, another application causes the local content rendering circuit 326 to add the water mark. In some embodiments, the water mark may be an audio code (e.g., a hiss) added to the audio data. In some embodiments, the anonymization circuit 316 can remove the water mark as part of the anonymization.

In some embodiments, the secure controller 304 can locally determine the amount identifying information would have been exposed had anonymization not occurred based on the identifier circuit 314. In some embodiments, the identifier circuit 314 can evaluate the quality and/or performance of the anonymization provided by the anonymization circuit 316 by feeding back the anonymized audio into the identifier circuit 314.

The identifier circuit 314 can implement learning (e.g., machine learning) based on the feedback. For example, for some users (e.g., a small percentage of users), the anonymization algorithms applied by the anonymization circuit 316 may not properly hide identifying characteristics. In these cases, the identification circuit 314 can identify that the user 102 has not been properly anonymized and cause the anonymization 316 to perform additional and/or different anonymization algorithms. In some embodiments, the identifier circuit 314 can periodically receive new updates of extraction algorithms that extract personal information. Therefore, the identifier circuit 314 can cause the anonymization circuit 316 to apply anonymization that account for developments in personal information extraction.

In some embodiments, the user 102 may have multiple choices for the operations of the secure processor 312 that the user 102 can select via the user choice and policy 302. One choice may be turning an anonymous mode on or off. In some embodiments, the secure controller 304 receives granular user choices. For example, for some systems, there may be a service operator setting suggestion 308 which indicates what level of anonymization should be applied to the audio data. In some embodiments, the user choice 302 can cause the secure controller 304 to ignore or accept the service operator setting suggestion 308.

In some embodiments, the secure controller 304 can control which identifiable characteristics should stay within the device 104 and/or within a home of the user 102 (e.g., stay within local devices and not sent to remote systems). The secure controller 304 can select which identifiable characteristics are to be sent to which service provider outside of the home. For example, in some embodiments, the identification circuit 314 identifiers the user 102 and sends an identifier of the user 102 to the secure access multiplexing circuit 318. In some embodiments, the secure controller 304 is configured to allow identifiable characteristics to be consumed by services inside the device (e.g., select which identifiable characteristics).

In some embodiments, the secure controller 304 can apply the anonymization to other information in addition to, or instead of, audio data. For example, the anonymization could be applied to images (e.g., images of a face), historical records, location data, data consumption, transactions, etc. In some embodiments, the anonymous mode could, when activated, cause data of the device to be anonymized, e.g., one or more types of data (e.g., voice, images, etc.), hiding a caller identifier for phone calls, etc.

In some embodiments, the device 104 provides an interface element in a user interface (e.g., a slider, a button, etc.) along with a name, "anonymous mode." The user 102 can interact with the user interface to activate the anonymous mode. In some embodiments, the interface may identify the anonymous mode as "anonymous mode," "hygienic mode," "filter mode," "plain wrap mode," "essence mode," and/or any other name. In some embodiments, the user interface of the device 104 provides multiple different options for applying different levels of anonymization.

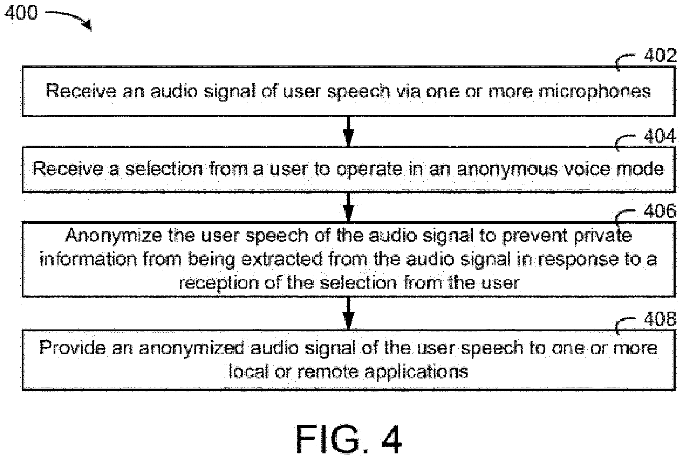

Referring now to **FIG. 4****,** a flow diagram of an example process 400 is shown of implementing voice anonymization. In some embodiments, the device 104 and/or components of the device 104 can perform the process 400. For example, the audio circuit 112, the anonymizer 202, the secure processor 312, the anonymization circuit 316, and/or any other component, computing system, etc. can be configured to perform the process 400.

In step 402, the anonymization circuit 316 can receive audio signals of user speech via the one or more microphone(s) 110. For example, the user 102 can speak one or more words or sentences to the microphone(s) 110. The speech can be commands, questions, notes, singing, conference recordings, classroom recordings, etc. In step 404, the secure controller 304 can receive a selection of a user to operate in an anonymous voice mode. The user may provide the selection via a touch screen input, a mouse, a keyboard, a button, etc. The user may have the ability to select between turning the anonymous voice mode on or off.

In step 406, the anonymization circuit 316 can anonymize the user speech of the audio signals to prevent private information from being extracted from the audio signal in response to a reception. The anonymization can remove one or more characteristic of the user speech. For example, the anonymization could change the pitch, cadence, intensity, absolute volume, dynamics, background noise (e.g., train sounds, fog horn sounds, background television sounds, audio watermarks, etc.), etc. In some embodiments, information such as the content played on a television or other device in the background, e.g., type of movie, sports, music, etc. could be identified if anonymization is not applied to the audio data. In some embodiments, the anonymization can apply a common synthesize of audio based on the audio signal. For example, by translating the speech to text and then synthesizing the text into audio. In some embodiments, the anonymization could be applying a vocoder.

In step 408, based on the anonymization, the result may be an anonymized audio signal of the user speech to one or more local or remote applications. For example, in some embodiments, the secure controller 304 can control the secure access multiplexer circuit 318 to provide one of the audio signal received in the step 402 or the anonymized audio signal generated in the step 406. In some embodiments, the secure controller 304 can control which applications receive either anonymized or regular audio signals. In some embodiments, the secure controller 304 can determine what level of anonymization is applied for specific local or remote applications.

The circuit design hardware system may be implemented in many different ways and in many different combinations of hardware and software. For example, all or parts of the implementations may be circuitry that includes an instruction processor, such as a Central Processing Unit (CPU), microcontroller, or a microprocessor; an Application Specific Integrated Circuit (ASIC), Programmable Logic Device (PLO), or Field Programmable Gate Array (FPGA), a Neural Network Engine; or circuitry that includes discrete logic or other circuit components, including analog circuit components, digital circuit components or both; or any combination thereof. The circuitry may include discrete interconnected hardware components and/or may be combined on a single integrated circuit die, distributed among multiple integrated circuit dies, or implemented in a Multiple Chip Module (MCM) of multiple integrated circuit dies in a common package, as examples.

The circuitry may further include or access instructions for execution by the circuitry. The instructions may be stored in a tangible storage medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HOD), or other magnetic or optical disk; or in or on another machine-readable medium. A product, such as a computer program product, may include a storage medium and instructions stored in or on the medium, and the instructions when executed by the circuitry in a device may cause the device to implement any of the processing described above or illustrated in the drawings.

The implementations may be distributed as circuitry among multiple system components, such as among multiple processors and memories, optionally including multiple distributed processing systems. Parameters, databases, and other data structures may be separately stored and managed, may be incorporated into a single memory or database, may be logically and physically organized in many different ways, and may be implemented in many different ways, including as data structures such as linked lists, hash tables, arrays, records, objects, or implicit storage mechanisms. Programs may be parts (e.g., subroutines) of a single program, separate programs, distributed across several memories and processors, or implemented in many different ways, such as in a library, such as a shared library (e.g., a Dynamic Link Library (DLL)). The DLL, for example, may store instructions that perform any of the processing described above or illustrated in the drawings, when executed by the circuitry.

Various implementations have been specifically described. However, many other implementations are also possible.

In order to deepen the understanding of the present technology reference is again made to FIG. 3, which will be described below in more detail. This description focusses on the data flow respectively the data routing in between the various components (sub-devices / units / functional blocks) of the device 104.

It is pointed out that Figure 3 of the device 104 comprises several sub-devices and function blocks. All these sub-devices and function blocks can be realized by hardware such as a (semiconductor) chip, a sub-system of a larger chip, an Application Specific Integrated Circuit (ASIC) and/or a Field Programmable Gate Array (FGPA). Further, the sub-devices and functional blocks may be realized by an appropriate software running on at least one processor of the device 104. Also combinations of hardware and software may be used for realizing the illustrated sub-devices and function blocks.

It is further pointed out that the depicted architecture, which allows for an anonymous mode operation of the device 104, is just an exemplary embodiment. Modifications, which can be taken for instance from the accompanying claims and the description above, can be easily derived by the skilled person.

The device 104 comprises or is connected to an audio input device 110, which, according to the embodiment described here, comprises two microphones. The number of microphones is not relevant for the present disclosure. In some embodiments the microphones are arranged for instance in an array, which, with the help of appropriate and well known audio data signal processing, allows for a directional resolution of the position of one or more users which are speaking into the microphones.

The audio input device 110 provides, in response to the signal received from the user(s), audio data AD to a secure interface 310, which in this document is also denominated a secure access manager. The secure access manager 310 forwards the audio data AD to the anonymization circuit 316. In some operational states of the device 104 the audio data AD are also provided to an identifier circuit 314. Further details regarding the anonymization circuit 316 and the identifier circuit 314 will be presented below.

According to the embodiment described here, the anonymization circuit 316 and the identification circuit 314 are implemented by a secure processor 312. This means that within the secure processor 312 the function of the anonymization circuit 316 and/or the function of the identifier circuit 314 may be provided by a sub-processor or by software modules executing at least one appropriate algorithm.

The above described operational state dependent routing of the audio data AD provided by the secure access manager 310 is controlled by a secure controller 304. According to the embodiment described here the control provided by the secure controller 304 depends on a user input 302. According to the embodiment described here this user input 302 is an individual choice by the user of the device 104. This choice is indicative for a desired anonymization policy which has to be carried out by the device 104.

As can be seen from FIG. 4, the secure controller 304 provides an output to a mode indicator 306, which indicates to the user the currently selected policy. The mode indicator 306 may be for instance an optical element such as for instance at least one LED and/or an acoustic output device which indicates the selected policy to the user acoustically. In order not to annoy the user of the device 104 the corresponding acoustic signal should not be a permanent acoustic signal. Instead, the acoustic signal may be a short characteristic tone which is received by the user when there is activated or changed a certain anonymization setting.

In some embodiments the secure controller 304 is configured for receiving information from a service operator (or service provider), wherein the information comprises (anonymization) setting suggestions 308 for the device 104. According to the embodiment described here this information includes professional suggestions from a service operator which suggestions may assist the secure controller 304 to determine a routing configuration within the device 104 for the audio data signals which is appropriate in order to implement the desired anonymization policy.

Turning back to the secure processor 312. The audio data AD received by the anonymization circuit 316 are anonymized by means of at least one known audio processing or anonymization algorithm. The corresponding output signals of the anonymization circuit 316 are anonymized audio data AAD. Examples for appropriate acoustic processing and anonymization algorithms are described above and, for the sake of conciseness of this document, will not be elucidated here once again. The anonymized audio data AAD are provided to a multiplexer circuit 318. As can be taken from FIG. 3, also the output identifier (ID) / meta data of the identifier circuit 314 is forwarded to the multiplexer circuit 318. The output ID of the identifier circuit 314 comprises metadata, which characterize the (original) audio data AD in a descriptive manner. As has already been mentioned above, the metadata may include user characteristic information such as for instance the gender of the user of the device 104.

As can be further taken from FIG. 3, the (original) audio data AD are also directly transferred, without any (relevant) audio data processing, from the secure access manager 310 to the multiplexer circuit 318. This means that, according to the embodiment described here, the multiplexer circuit 318 comprises altogether three data input ports.

The multiplexer circuit 318 of course also comprises several output ports. One of these ports is a "feedback" output port FO. As can be taken from FIG. 3, this feedback output port FO forwards the anonymized audio data AAD to a (second) input port of the identifier circuit 314. As has been mentioned above in more detail, the feedback of the anonymized audio data AAD to the identifier circuit 314 is used for a quality indicator or quality check for the degree of anonymization carried out by the anonymization circuit 316.

The multiplexer circuit 318 is under control of the secure controller 304. This means that the secure controller 304 does not only control the data signal provided by the secure access manager 310 but also the data signal routing provided by the multiplexer circuit 318. Also the routing by means of the multiplexer circuit 318 depends on the anonymization policy 302 which is selected by the user (as described above).

As can be taken from FIG. 3, the multiplexer circuit 318 is communicatively coupled with three applications. Of course, the described anonymization technology can also be used with a smaller or higher number of applications. According to the embodiment described here a first application is a speech recognition system 320, a second application is a local personalization system 322 and the third application is an application 324 provided to be device 104 / for the user by a cloud service provider via a data connection, in particular via the internet.

The multiplexer circuit 318 comprises several multiplexer output MO (ports) for providing audio signals AS to the various applications 320, 322, 324. Respectively two multiplexer output ports MO are assigned to each one of the above-described applications 320, 322, and 324. Thereby, one of the respectively two multiplexer output ports MO is used for providing first audio data AD1 and the other one of the respectively two multiplexer output ports MO is used for providing second audio data AD2 to the respective application 320, 322, 324. The two types of audio data AD1 and AD2 are generated based on, in particular by combining, the content of the different audio data input (streams) for the multiplexer circuit 318, wherein the audio data inputs are (i) the audio data AD, (ii) the identifier / meta data ID, and (iii) the anonymized audio data AAD.

It is mentioned that the number of audio data which, depending on the desired degree of anonymization, are provided to the various applications 320, 322, 324 is not restricted to two. Based on the different audio data input signals for the multiplexer circuit 318 theoretically an infinite number of types of output data can be supplied to the applications 320, 322, 324.

In accordance with the described technology the two types of audio data AD1 and AD2 differ in their degree of anonymization. Depending on the desired degree of anonymization for each one of the applications 320, 322, 324 the first audio data AD1 and/or second audio data AD2 are provided to the respective application 320, 322, 324.

As can be further taken from FIG. 3, the speech recognition system 320 is communicatively coupled with the secure controller 304. This allows the user to provide the secure controller 304 with information, for instance the desired anonymization policy, acoustically.

The speech recognition ecosystem 320 may be any virtual assistant device, such as for instance the Alexa devices developed by Amazon. It provides a lot of functionality and/or service for the user based on convenient acoustic user inputs respectively a voice interaction with the user. The speech recognition ecosystem 320 is communicatively coupled with a local content rendering circuit 326 in such a manner that the speech recognition ecosystem 320 can forward rendering and/or control data RCD which may cause the local content rendering circuit 326 to send certain media content data to a display 330 (e. g. via a HDMI or AV interface) and/or to a speaker. According to the exemplary embodiment described here the speaker is an internal speaker 328. In other embodiments a speaker device external from the device 104 is used.

In accordance with the known technology of virtual assistant devices the rendering and/or control data RCD can cause the local content rendering circuit 326 to render many different types of media content. Examples for popular media content may be for instance music playback, making to-do lists, setting alarms, streaming podcasts, playing audiobooks, and providing weather, traffic, sports, and other real-time information, such as news.

The exemplary and optional application "in-device personalization" may be used for providing the user with specific information which might be interesting for the user. An example for such information may be recommendations for movies or songs which may fit to personal preferences of user for media consumption.

As can be further taken from FIG. 3, there is a further audio feedback data signal FBS forwarded from the local content rendering circuit 326 to the anonymization circuit 316. According to the exemplary embodiment described here this signal is indirectly provided via the secure access manager 310. This may allow for achieving a high security level also for the audio feedback data signal FBS.

The feedback signal FBS is also a digital audio data signal. In the embodiment described here the feedback signal FBS and the signal provided to the internal speaker 328 and/or to the display 330 are the same or carry at least the same information. This means that for the device 104 the audio feedback data signal FBS is a known or a so-called correlated signal. Taking into account this audio feedback data signal for the anonymization process may allow the anonymization circuit to perform the anonymization functionality with a high signal to noise ratio (SNR). This may improve the anonymization procedure carried out by the anonymization circuit 316.

With regard to previously described FIG. 4 it is pointed out that steps 402 and 404 may be carried out in any order of time including for example, partially overlapping, simultaneously and a priori.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 100: system
- 102: user
- 104: device
- 106: processors
- 108: memory device(s)
- 110: audio input device / microphone(s)
- 112: audio circuit
- 114: local application(s)
- 116: network
- 118: remote applications

- 200: system
- 202: anonymizer

- 302: user choices and/or policies
- 304: secure controller
- 306: mode indicator(s)
- 308: service operator setting suggestion
- 310: secure interface / secure access manager
- 312: secure processor
- 314: identifier circuit
- 316: anonymization circuit
- 318: multiplexer circuit
- 320: speech recognition ecosystem(s)
- 322: in-device personalization systems
- 324: cloud services
- 326: local content rendering circuit
- 328: internal speaker
- 330: display
- AD: audio data
- AAD: anonymized audio data
- ID: identifier /meta data
- FO: feedback output
- MO: multiplexer output
- AS: audio signal
- AD1: first type of partially anonymized audio data
- RCD: rendering and/or control data
- FBS: audio feedback data signal

## Claims

1. A device (104) comprising:
one or more microphone devices (110) configured to generate audio data (AD) comprising spoken voice data based on spoken words of a user (102); and
an anonymization circuit (316) configured to:
receive the audio data (AD) comprising the spoken voice data from the one or more microphone devices (110);
generate anonymized audio data (AAD) by anonymizing the audio data (AD) to prevent one or more applications (114, 118; 320, 322, 324) from extracting private information of the user (102) from the audio data (AD); and
provide the anonymized audio data (AAD) to the one or more applications (114, 118; 320, 322, 324);
**characterised in that** the device further comprises an identification circuit (314) configured to:
receive the anonymized audio data (AAD) from the anonymization circuit (316);
evaluate operations performed by the anonymization circuit (316) by determining whether the private information is extractible from the anonymized audio data (AAD); and
cause the anonymization circuit (316) to update the operations in response to a determination that the private information is extractible from the anonymized audio data (AAD).

2. The device (104) of Claim 1, wherein
the anonymization circuit (316) is configured to generate the anonymized audio data (AAD) by:
generating text data from the voice data based on the spoken words of the user (102); and
synthesizing the anonymized audio data (AAD) based on the text data.

3. The device (104) of Claim 1, wherein
the anonymization circuit (316) is configured to generate the anonymized audio data (AAD) by
changing a pitch of the voice data.

4. The device (104) of Claim 1, wherein
the anonymization circuit (316) is configured to generate the anonymized audio data (AAD) by
applying a wideband vocoder to the audio data.

5. The device (104) of Claim 1, wherein
the anonymization circuit (316) is configured to generate the anonymized audio data (AAD) by
applying a Mel Frequency Cepstral Coefficient, MFCC, algorithm to the audio data, wherein
the anonymized audio data (AAD) includes one or more features identified by the MFCC algorithm.

6. The device (104) of Claim 1, wherein
the anonymization circuit (316) and/or the identification circuit (314) is configured to
identify the user (102) based on the voice data and output an identifier (ID) associated with the user (102) to the one or more applications (114, 118; 320, 322, 324),
wherein the one or more applications (114, 118; 320, 322, 324) are configured to generate one or more personalized outputs for the user (102) based on the identifier (ID).

7. The device (104) of Claim 1, wherein
the one or more applications (114, 118) are at least one of one or more local applications (114) run by the device (104) and one or more remote applications (118).

8. The device (104) of Claim 1, wherein the device comprises:
a multiplexing circuit (318) configured to multiplex an output (MO) to the one or more applications (114, 118; 320, 322, 324) between the anonymized audio data (AAD) and an audio signal (AS);
a controller circuit (304) is configured to:
receive a user input (302) indicating to apply anonymization to the audio data; and
cause the multiplexing circuit (318) to output the anonymized audio data (AAD).

9. The device (104) of Claim 8, wherein
the controller circuit (304) is configured to
cause a user interface (306) to display an indication of the anonymization being applied to the audio data (AD) in response to receiving the user input (302) indicating to apply the anonymization to the audio data (AD).

10. The device (104) of Claim 8, wherein
the controller circuit (304) is configured to:
receive an indication of specific characteristics of the audio data (AD) to provide to each of the one or more applications (114, 118);
cause the multiplexing circuit (318) to provide the specific characteristics to each of the one or more applications (114, 118) based on the indication.

11. The device (104) as set forth in any one of the preceding claims, further comprising
a secure access manager (310) connected between the one or more microphone devices (110) and the anonymization circuit (316), the secure access manager (310) providing a secure interface between the (external) microphone devices (110) and at least the anonymization circuit (316).

12. The device (104) as set forth in any one of the preceding claims, further comprising
a local content rendering circuit (326), which is configured for receiving rendering and/or control data (RCD) from at least one of the one or more applications (320), wherein
the local content rendering circuit (326) is communicatively coupled with the anonymization circuit (316) via a data link for forwarding an audio feedback data signal (FBS), wherein the anonymization circuit (316) is configured for generating the anonymized audio data (AAD) by taking into account also the audio feedback data signal (FBS).

13. The device (104) as set forth in any one of the preceding claims, further comprising
a service operator interface for receiving information from a service operator, wherein the information comprises setting suggestions (308) for the device (104).

14. A method for performing an audio data anonymization with a device, in particular with a device as set forth in any one of the preceding claims, the method comprising:
generating audio data (AD) comprising spoken voice data based on spoken words of a user (102);
receiving the generated audio data (AD) by an anonymization circuit (316);
generating anonymized audio data (AAD) by anonymizing the audio data (AD) by the anonymization circuit (316), wherein the anonymized audio data (AAD) prevent extracting private information of the user (102) from the audio data (AD);
receiving, by an identification circuit (314), the anonymized audio data (AAD) from the anonymization circuit (316);
evaluating, by the identification circuit (314), operations performed by the anonymization circuit (316) by determining whether the private information is extractible from the anonymized audio data (AAD);
causing, by the identification circuit (314), the anonymization circuit (316) to update the operations in response to a determination that the private information is extractible from the anonymized audio data (AAD); and
providing the anonymized audio data (AAD) to the one or more applications (114, 118; 320, 322, 324).

## Patentansprüche

1. Eine Vorrichtung (104) aufweisend:
eine oder mehrere Mikrofonvorrichtungen (110), welche konfiguriert sind, Audiodaten (AD) zu erzeugen, welche gesprochene Stimmdaten aufweist, basierend auf gesprochenen Wörtern eines Benutzers (102); und
ein Anonymisierungsschaltkreis (316), welcher konfiguriert ist zum:
Empfangen der Audiodaten (AD) aufweisend die gesprochenen Stimmdaten von der einen oder den mehreren Mikrofonvorrichtungen (110);
Erzeugen anonymisierter Audiodaten (AAD) mittels Anonymisierens der Audiodaten (AD), um zu verhindern, dass eine oder mehrere Anwendungen (114, 118; 320, 322, 324) eine private Information des Benutzers (102) aus den Audiodaten (AD) extrahiert; und
Bereitstellen der anonymisierten Audiodaten (AAD) zu der einen oder den mehreren Anwendungen (114, 118; 320, 322, 324);
**dadurch gekennzeichnet, dass** die Vorrichtung ferner aufweist einen Identifizierungsschaltkreis (314), welcher konfiguriert ist zum:
Empfangen der anonymisierten Audiodaten (AAD) von dem Anonymisierungsschaltkreis (316);
Evaluieren von Vorgängen, welche von dem Anonymisierungsschaltkreis (316) ausgeführt werden, mittels Bestimmens, ob die private Information aus den anonymisierten Audiodaten (AAD) extrahierbar ist; und
Veranlassen des Anonymisierungsschaltkreises (316), die Vorgänge upzudaten, als Reaktion auf ein Bestimmen, dass die private Information aus den anonymisierten Audiodaten (AAD) extrahierbar ist.

2. Die Vorrichtung (104) gemäß Anspruch 1, wobei
der Anonymisierungsschaltkreis (316) konfiguriert ist, die anonymisierten Audiodaten (AAD) zu erzeugen mittels:
Erzeugens von Textdaten aus den Stimmdaten, basierend auf den gesprochenen Wörtern des Benutzers (102); und
Synthetisieren der anonymisierten Audiodaten (AAD) basierend auf den Textdaten.

3. Die Vorrichtung (104) gemäß Anspruch 1, wobei
der Anonymisierungsschaltkreis (316) konfiguriert ist, die anonymisierten Audiodaten (AAD) zu erzeugen mittels
Änderns eines Pitches der Stimmdaten.

4. Die Vorrichtung (104) gemäß Anspruch 1, wobei
der Anonymisierungsschaltkreis (316) konfiguriert ist, die anonymisierten Audiodaten (AAD) zu erzeugen mittels
Anwendens eines Breitband-Vocoders auf die Audiodaten.

5. Die Vorrichtung (104) gemäß Anspruch 1, wobei
der Anonymisierungsschaltkreis (316) konfiguriert ist, die anonymisierten Audiodaten (AAD) zu erzeugen mittels
Anwendens eines Mel Frequency Cepstral Coefficient, MFCC, Algorithmus auf die Audiodaten, wobei
die anonymisierten Audiodaten (AAD) ein oder mehr Merkmale enthalten, welche mittels des MFCC Algorithmus identifiziert werden.

6. Die Vorrichtung (104) gemäß Anspruch 1, wobei
der Anonymisierungsschaltkreis (316) und/oder der Identifizierungsschaltkreis (314) konfiguriert ist zum
Identifizieren des Benutzers (102) basierend auf den Stimmdaten und Ausgeben eines Identifizierers (ID), welcher mit dem Benutzer (102) assoziiert ist, zu der einen oder den mehreren Anwendungen (114, 118; 320, 322, 324),
wobei die eine oder die mehreren Anwendungen (114, 118; 320, 322, 324) konfiguriert sind, eine oder mehrere personalisierte Ausgaben für den Benutzer (102) zu erzeugen, basierend auf dem Identifizierer (ID).

7. Die Vorrichtung (104) gemäß Anspruch 1, wobei
die eine oder die mehreren Anwendungen (114, 118) mindestens eine von einer oder mehreren lokalen Anwendungen (114) sind, welche von der Vorrichtung (104) ausgeführt werden, und einer oder mehreren Remote-Anwendungen (118).

8. Die Vorrichtung (104) gemäß Anspruch 1, wobei die Vorrichtung aufweist:
einen Multiplexer-Schaltkreis (318), welcher konfiguriert ist, eine Ausgabe (MO) zu der einen oder den mehreren Anwendungen (114, 118; 320, 322, 324) zwischen den anonymisierten Audiodaten (AAD) und einem Audiosignal (AS) zu multiplexen;
einen Steuerschaltkreis (304), welcher konfiguriert ist zum:
Empfangen einer Benutzereingabe (302), welche angibt, eine Anonymisierung auf die Audiodaten anzuwenden; und
Veranlassen des Multiplexer-Schaltkreises (318), die anonymisierten Audiodaten (AAD) auszugeben.

9. Die Vorrichtung (104) gemäß Anspruch 8, wobei
der Steuerschaltkreis (304) konfiguriert ist zum
Veranlassen einer Benutzerschnittstelle (306), eine Angabe der Anonymisierung anzuzeigen, welche auf die Audiodaten (AD) angewendet wird, als Reaktion auf das Empfangen der Benutzereingabe (302), welche angibt, eine Anonymisierung auf die Audiodaten (AD) anzuwenden.

10. Die Vorrichtung (104) gemäß Anspruch 8, wobei
der Steuerschaltkreis (304) konfiguriert ist zum:
Empfangen einer Angabe spezifischer Eigenschaften der Audiodaten (AD), welche zu jeder der einen oder der mehreren Anwendungen (114, 118) bereitzustellen sind;
Veranlassen des Multiplexer-Schaltkreises (318), die spezifischen Eigenschaften zu jeder der einen oder der mehreren Anwendungen (114, 118) bereitzustellen, basierend auf der Angabe.

11. Die Vorrichtung (104) gemäß einem beliebigen der vorangehenden Ansprüche, ferner aufweisend
einen sicheren Zugriffsmanager (310), welcher zwischen die eine oder die mehreren Mikrofonvorrichtungen (110) und den Anonymisierungsschaltkreis (316) geschaltet ist, wobei der sichere Zugriffsmanager (310) eine sichere Schnittstelle zwischen den (externen) Mikrofonvorrichtungen (110) und dem mindestens einen Anonymisierungsschaltkreis (316) bereitstellt.

12. Die Vorrichtung (104) gemäß einem beliebigen der vorangehenden Ansprüche, ferner aufweisend
einen lokalen Inhalt-Rendering-Schaltkreis (326), welcher konfiguriert ist zum Empfangen von Rendering- und/oder Steuerdaten (RCD) von mindestens einer der einen oder mehreren Anwendungen (320), wobei
der lokale Inhalt-Rendering-Schaltkreis (326) mit dem Anonymisierungsschaltkreis (316) via eine Datenverbindung zum Weiterleiten eines Audio-Feedback-Datensignals (FBS) kommunikativ gekoppelt ist, wobei der Anonymisierungsschaltkreis (316) konfiguriert ist zum Erzeugen der anonymisierten Audiodaten (AAD) mittels Berücksichtigens auch des Audio-Feedback-Datensignals (FBS).

13. Die Vorrichtung (104) gemäß einem beliebigen der vorangehenden Ansprüche, ferner aufweisend
eine Dienstbetreiber-Schnittstelle zum Empfangen einer Information von einem Dienstbetreiber, wobei die Information Einstellungsvorschläge (308) für die Vorrichtung (104) aufweist.

14. Ein Verfahren zum Ausführen einer Audiodaten-Anonymisierung mit einer Vorrichtung, insbesondere mit einer Vorrichtung gemäß einem beliebigen der vorangehenden Ansprüche, wobei das Verfahren aufweist:
Erzeugen von Audiodaten (AD) aufweisend gesprochene Stimmdaten basierend auf gesprochenen Wörtern eines Benutzers (102);
Empfangen der erzeugten Audiodaten (AD) mittels eines Anonymisierungsschaltkreises (316);
Erzeugen von anonymisierten Audiodaten (AAD) mittels Anonymisierens der Audiodaten (AD) mittels des Anonymisierungsschaltkreises (316), wobei die anonymisierten Audiodaten (AAD) das Extrahieren einer privaten Information des Benutzers (102) aus den Audiodaten (AD) verhindert;
Empfangen, mittels eines Identifizierungsschaltkreises (314) der anonymisierten Audiodaten (AAD) von dem Anonymisierungsschaltkreis (316);
Evaluieren, mittels des Identifizierungsschaltkreises (314), von Vorgängen, welche mittels des Anonymisierungsschaltkreises (316) ausgeführt werden, mittels Bestimmens, ob die private Information aus den anonymisierten Audiodaten (AAD) extrahierbar ist;
Veranlassen, mittels des Identifizierungsschaltkreises (314), des Anonymisierungsschaltkreises (316), die Vorgänge upzudaten, als Reaktion auf ein Bestimmen, dass die private Information aus den anonymisierten Audiodaten (AAD) extrahierbar ist; und
Bereitstellen der anonymisierten Audiodaten (AAD) zu der einen oder den mehreren Anwendungen (114, 118; 320, 322, 324).

## Revendications

1. Dispositif (104), comprenant :
un ou plusieurs dispositifs microphones (110) configurés pour générer des données audio (AD) comprenant des données vocales prononcées sur la base de mots prononcés d'un utilisateur (102) ; et
un circuit d'anonymisation (316) configuré pour :
recevoir les données audio (AD) comprenant les données vocales prononcées à partir des un ou plusieurs dispositifs microphones (110) ;
générer des données audio anonymisées (AAD) en anonymisant les données audio (AD) pour empêcher une ou plusieurs applications (114, 118 ; 320, 322, 324) d'extraire des informations privées de l'utilisateur (102) à partir des données audio (AD) ; et
fournir les données audio anonymisées (AAD) aux une ou plusieurs applications (114, 118 ; 320, 322, 324) ;
**caractérisé en ce que** le dispositif comprend en outre
un circuit d'identification (314) configuré pour :
recevoir les données audio anonymisées (AAD) à partir du circuit d'anonymisation (316) ;
évaluer des opérations effectuées par le circuit d'anonymisation (316) en déterminant si les informations privées peuvent être extraites des données audio anonymisées (AAD) ; et
amener le circuit d'anonymisation (316) à mettre à jour les opérations en réponse à une détermination que les informations privées peuvent être extraites à partir des données audio anonymisées (AAD).

2. Dispositif (104) selon la revendication 1, dans lequel
le circuit d'anonymisation (316) est configuré pour générer les données audio anonymisées (AAD) en :
générant des données de texte à partir des données vocales sur la base des mots prononcés par l'utilisateur (102) ; et
synthétisant les données audio anonymisées (AAD) sur la base des données de texte.

3. Dispositif (104) selon la revendication 1, dans lequel
le circuit d'anonymisation (316) est configuré pour générer les données audio anonymisées (AAD) en modifiant une hauteur des données vocales.

4. Dispositif (104) selon la revendication 1, dans lequel
le circuit d'anonymisation (316) est configuré pour générer les données audio anonymisées (AAD) en
appliquant un vocodeur à large bande aux données audio.

5. Dispositif (104) selon la revendication 1, dans lequel
le circuit d'anonymisation (316) est configuré pour générer les données audio anonymisées (AAD) en
appliquant un algorithme de coefficients cepstraux de fréquence de Mel, MFCC, aux données audio, dans lequel
les données audio anonymisées (MD) comprennent une ou plusieurs caractéristiques identifiées par l'algorithme MFCC.

6. Dispositif (104) selon la revendication 1, dans lequel
le circuit d'anonymisation (316) et/ou le circuit d'identification (314) est configuré pour
identifier l'utilisateur (102) sur la base des données vocales et délivrer en sortie un identifiant (ID) associé à l'utilisateur (102) aux une ou plusieurs applications (114, 118 ; 320, 322, 324),
dans lequel les une ou plusieurs applications (114, 118 ; 320, 322, 324) sont configurées pour générer une ou plusieurs sorties personnalisées pour l'utilisateur (102) sur la base de l'identifiant (ID).

7. Dispositif (104) selon la revendication 1, dans lequel
les une ou plusieurs applications (114, 118) sont au moins une parmi une ou plusieurs applications locales (114) exécutées par le dispositif (104) et une ou plusieurs applications distantes (118).

8. Dispositif (104) selon la revendication 1, dans lequel le dispositif comprend :
un circuit de multiplexage (318) configuré pour multiplexer une sortie (MO) vers les une ou plusieurs applications (114, 118 ; 320, 322, 324) entre les données audio anonymisées (AAD) et un signal audio (AS) ;
un circuit de dispositif de commande (304) est configuré pour :
recevoir une entrée d'utilisateur (302) indiquant d'appliquer une anonymisation aux données audio ; et
amener le circuit de multiplexage (318) à délivrer en sortie les données audio anonymisées (AAD).

9. Dispositif (104) selon la revendication 8, dans lequel
le circuit de commande (304) est configuré pour
amener une interface utilisateur (306) à afficher une indication de l'anonymisation appliquée aux données audio (AD) en réponse à la réception de l'entrée d'utilisateur (302) indiquant d'appliquer l'anonymisation aux données audio (AD).

10. Dispositif (104) selon la revendication 8, dans lequel
le circuit de commande (304) est configuré pour :
recevoir une indication de caractéristiques spécifiques des données audio (AD) à fournir à chacune des une ou plusieurs applications (114, 118) ;
amener le circuit de multiplexage (318) à fournir les caractéristiques spécifiques à chacune des une ou plusieurs applications (114, 118) sur la base de l'indication.

11. Dispositif (104) selon l'une quelconque des revendications précédentes, comprenant en outre
un gestionnaire d'accès sécurisé (310) connecté entre les un ou plusieurs dispositifs microphones (110) et le circuit d'anonymisation (316), le gestionnaire d'accès sécurisé (310) fournissant une interface sécurisée entre les dispositifs microphones (externes) (110) et au moins le circuit d'anonymisation (316).

12. Dispositif (104) selon l'une quelconque des revendications précédentes, comprenant en outre
un circuit de restitution de contenu local (326), qui est configuré pour recevoir des données de restitution et/ou de commande (RCD) en provenance d'au moins une des une ou plusieurs applications (320), dans lequel
le circuit de restitution de contenu local (326) est couplé en communication avec le circuit d'anonymisation (316) via une liaison de données pour transmettre un signal de données de rétroaction audio (FBS), dans lequel le circuit d'anonymisation (316) est configuré pour générer les données audio anonymisées (AAD) en prenant également en compte le signal de données de rétroaction audio (FBS).

13. Dispositif (104) selon l'une quelconque des revendications précédentes, comprenant en outre
une interface d'opérateur de service pour recevoir des informations en provenance d'un opérateur de service, dans lequel les informations comprennent des suggestions de réglage (308) pour le dispositif (104).

14. Procédé pour effectuer une anonymisation de données audio à l'aide d'un dispositif, en particulier à l'aide d'un dispositif selon l'une quelconque des revendications précédentes, le procédé comprenant les étapes consistant à :
générer des données audio (AD) comprenant des données vocales prononcées sur la base de mots prononcés d'un utilisateur (102) ;
recevoir les données audio générées (AD) par l'intermédiaire d'un circuit d'anonymisation (316) ;
générer des données audio anonymisées (AAD) en anonymisant les données audio (AD) par l'intermédiaire du circuit d'anonymisation (316), dans lequel les données audio anonymisées (AAD) empêchent d'extraire des informations privées de l'utilisateur (102) à partir des données audio (AD) ;
recevoir, par l'intermédiaire d'un circuit d'identification (314), les données audio anonymisées (AAD) à partir du circuit d'anonymisation (316) ;
évaluer, par l'intermédiaire du circuit d'identification (314), des opérations effectuées par le circuit d'anonymisation (316) en déterminant si les informations privées peuvent être extraites des données audio anonymisées (AAD) ;
amener, par l'intermédiaire du circuit d'identification (314), le circuit d'anonymisation (316) à mettre à jour les opérations en réponse à une détermination que les informations privées peuvent être extraites à partir des données audio anonymisées (AAD) ; et
fournir les données audio anonymisées (AAD) à une ou plusieurs applications (114, 118 ; 320, 322, 324).
